# EUROPEAN PATENT APPLICATION

(11) **EP 3 540 250 A1**
(43) Date of publication of application: **18.09.2019**
(21) Application number: 17869839.5
(22) Date of filing: 10.11.2017
(51) Int. Cl.: F16C 33/46, F16C 19/26, F16C 19/28

(54) **RESIN HOLDER FOR CYLINDRICAL ROLLER BEARINGS AND CYLINDRICAL ROLLER BEARING**

(30) Priority: 14.11.2016 JP 2016221737
(71) Applicant: NSK Ltd., Tokyo 141-8560 (JP)
(72) Inventor: SOGA, Shuji, Fujisawa-shi Kanagawa 251-8501 (JP)
(74) Representative: Grünecker Patent- und Rechtsanwälte PartG mbB
(86) International application number: PCT/JP2017/040573
(87) International publication number: WO 2018/088515

(57) **Abstract**

A cylindrical roller bearing resin holder (14) wherein surfaces (19) on both sides in the circumferential direction of both end sections (17b) in the axial direction of a column (17), comprise both: a first flat surface (19a) that gradually decreases the length of the column (17) in the circumferential direction, from the outer peripheral surface towards the inner diameter side; and a second flat surface (19b) that gradually increases the length of the column (17) in the circumferential direction, from a connection section (19c) at which same connects to the first flat surface (19a), towards the inner diameter side. A pocket corner (20) between the column (17) and an annular section (16) comprises: a first curved surface (20a) connecting the first flat surface (19a) and the annular section (16) and having a first radius of curvature; and a second curved surface (20b) connecting the second flat surface (19b) and the annular section (16) and having a second radius of curvature greater than the first radius of curvature. In a state in which the center of revolution (C1) of a cylindrical roller (13) and the axis (C2) of the holder (14) match, the connection section (19c) between the first flat surface (19a) and the second flat surface (19b) and a connection section (20c) between the first curved surface (20a) and the second curved surface (20b) are positioned further on the inner diameter side than the pitch circle diameter (PCD) of the cylindrical roller (13).

## Description

### TECHNICAL FIELD

The present invention relates to a resin cage for a cylindrical roller bearing and a cylindrical roller bearing, and particularly to a resin cage for a cylindrical roller bearing and a cylindrical roller bearing suitable for a machine tool spindle.

### BACKGROUND ART

A single-row cylindrical roller bearing used in a machine tool spindle is often used at high speed rotation (for example, dmN (= (inner diameter of bearing + outer diameter of bearing) / 2 × rotational speed (rpm)) is 350,000 to 700,000 or more) and under negative radial gap conditions. Under such severe use conditions, since a cage is subjected to a force due to mutual sliding with a roller, various countermeasures have been proposed to increase the strength of the cage (see, for example, Patent Literatures 1 and 2).

For example, in the cage for a cylindrical roller bearing described in Patent Literature 1, a curvature radius of a curved surface at a pocket corner portion becomes minimum on a pitch circle of the roller, and the curvature radius increases toward an inner diameter side or an outer diameter side. Accordingly, stress concentration on the pocket corner portion at a pocket opening portion is relaxed, and breakage of a column portion having a stress concentration portion as a base point is prevented.

### CITATION LIST

### PATENT LITERATURE

Patent Literature 1: JP-Y-H01-025782
Patent Literature 2: JP-A-H09-177793

### SUMMARY OF INVENTION

### PROBLEM TO BE SOLVED

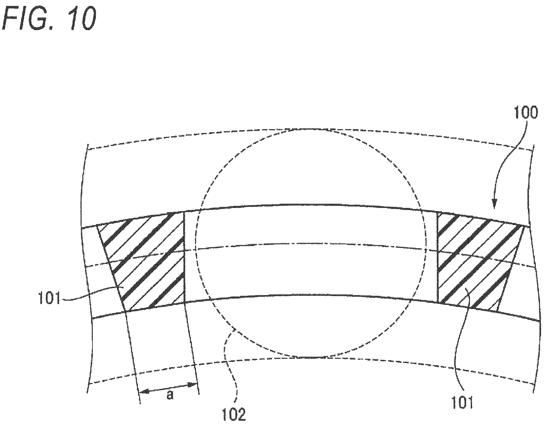

As shown in FIG. 10, in a related cage 100 used for the cylindrical roller bearing, since the thickness of an inner diameter side of a column portion 101 is decreased, the strength of the column portion 101 on the inner diameter side is required to be improved. Particularly, in a case of a bearing ring guide type, a force generated by mutual sliding with the roller can be received by a guide surface of an annular portion. However, in a case of a roller guide type, the strength of the column portion 101 is more important since all force generated by the mutual sliding with the roller 102 is received by a guide surface of the column portion 101.

Further, in the cage for a cylindrical roller bearing described in Patent Literature 1, since the curved surface of the pocket corner portion continuously changes, it is difficult to manufacture a mold for resin molding, and it is difficult to define a design in which a chamber portion of the roller and the curved surface of the pocket corner portion do not come into contact with each other during operation. Since the chamfer portion of the roller has a poor roughness or circularity, wear and vibration occur when coming into contact with the cage. Further, the cage for a cylindrical roller bearing described in Patent Literature 1 does not take measures against the thickness of the inner diameter side of the column portion.

The present invention has been made in view of the above-described problems, and an object thereof is to provide a resin cage for a cylindrical roller bearing and a cylindrical roller bearing capable of ensuring sufficient durability even under severe use conditions in a roller guide type.

### SOLUTION TO PROBLEM

The above object of the present invention is achieved by the following configurations.
(1) A resin cage for a cylindrical roller bearing used in a roller guide type includes a pair of annular portions and a plurality of column portions which axially connect the pair of annular portions and forms a plurality of pocket portions which rotatably hold a plurality of cylindrical rollers respectively,
   wherein the column portion includes a roller holding portion at an axially intermediate portion,
   wherein each of both circumferential side surfaces of both axial end portions of the column portion located more axially outward than the roller holding portion includes a first flat surface which gradually shortens a circumferential length of the column portion from an outer circumferential surface toward an inner diameter side, and a second flat surface which gradually lengthens the circumferential length of the column portion from a connecting portion with the first flat surface toward the inner diameter side,
   wherein a pocket corner portion between the column portion and the annular portion includes a first curved surface having a first curvature radius and connecting the first flat surface to the annular portion, and a second curved surface having a second curvature radius larger than the first curvature radius and connecting the second flat surface to the annular portion, and
   wherein in a state in which a revolution center of the cylindrical roller coincides with an axis center of the cage, the connecting portion between the first flat surface and the second flat surface and a connecting portion between the first curved surface and the second curved surface are located more on the inner diameter side than a pitch circle diameter of the cylindrical rollers.
(2) In the resin cage for a cylindrical roller bearing according to (1), a first angle at which the first flat surface intersects a straight line extending along a radial direction of the cage is smaller than a second angel at which the second flat surface intersects the straight line.
(3) In the resin cage for a cylindrical roller bearing according to (1) or (2), the first angle at which the first flat surface intersects the straight line extending along the radial direction of the cage of the first flat surface is formed such that a distance between a pair of the first flat surfaces which form the pocket portion is the same across the radial direction of the cage or spaced apart from each other toward the outer diameter side of the cage.
(4) A cylindrical roller bearing includes:
   an outer ring having an outer ring raceway surface formed on an inner circumferential surface;
   an inner ring having an inner ring raceway surface formed on an outer circumferential surface;
   a plurality of cylindrical rollers rollably disposed between the outer ring raceway surface and the inner ring raceway surface; and
   the resin cage for a cylindrical roller bearing according to any one of (1) to (3).

### EFFECTS OF INVENTION

According to the resin cage for a cylindrical roller bearing and the cylindrical roller bearing of the present invention, each of the both circumferential side surfaces of the both axial end portions of the column portion located more axially outward than the roller holding portion includes the first flat surface which gradually shortens the circumferential length of the column portion from the outer circumferential surface toward the inner diameter side, and the second flat surface which gradually lengthens the circumferential length of the column portion from the connecting portion with the first flat surface toward the inner diameter side.
The pocket corner portion between the column portion and the annular portion includes the first curved surface having the first curvature radius and connecting the first flat surface to the annular portion, and the second curved surface having the second curvature radius larger than the first curvature radius and connecting the second flat surface to the annular portion. Further, in a state in which a revolution center of the cylindrical roller coincides with an axis center of the cage, the connecting portion between the first flat surface and the second flat surface and the connecting portion between the first curved surface and the second curved surface are located more on the inner diameter side than a pitch circle diameter of the cylindrical roller.

Accordingly, the thickness of the inner diameter side of the column portion formed by the second flat surface can be increased, the stress concentration on the pocket corner portion can be relaxed by the second curved surface, and the strength of the inner diameter side of the column portion can be improved. As a result, in the roller guide type cage, sufficient durability can be ensured even under severe use conditions.

Since the first curved surface and the second curved surface each have a single curvature radius, the pocket corner portion can be easily manufactured.

Further, in the state in which the revolution center of the cylindrical roller coincides with the axis center of the cage, since the connecting portion between the first flat surface and the second flat surface and the connecting portion between the first curved surface and the second curved surface are located more on the inner diameter side than the pitch circle diameter of the cylindrical roller, the chamfer portion of the cylindrical roller and the pocket corner portion can be designed to not reliably come into contact with each other.

### BRIEF DESCRIPTION OF DRAWINGS

FIG. 1 is a longitudinal cross-sectional view showing a cylindrical roller bearing to which a cage for a cylindrical roller bearing according to an embodiment of the present invention is applied.
FIG. 2 is a perspective view of a main part of the cage for a cylindrical roller bearing of FIG. 1.
FIG. 3 is a cross-sectional view of the main part of the cage for a cylindrical roller bearing of FIG. 1.
FIG. 4 is a schematic cross-sectional view of the cage for a cylindrical roller bearing taken along a line IV-IV in FIG. 3.
FIG. 5A is a view showing a relationship between a pocket corner portion on a column portion outer diameter side of the cage and a roller in the present embodiment, FIG. 5B is a view showing a case where the thickness of the column portion is decreased and a curvature radius of the pocket corner portion is increased, and FIG. 5C is a view showing a case where the thickness of an annular portion is decreased and the curvature radius of the pocket corner portion is increased.
FIGS. 6A to 6C are cross-sectional views of a main part of a cylindrical roller bearing according to first to third modifications of the present invention.
FIGS. 7A to 7D are cross-sectional views of a main part of a cylindrical roller bearing according to fourth to seventh modifications of the present invention.
FIGS. 8A and 8B are cross-sectional views of a main part of a cylindrical roller bearing according to eighth and ninth modifications of the present invention.
FIG. 9 is a cross-sectional view of a main part of a cylindrical roller bearing according to a tenth modification of the present invention.
FIG. 10 is a cross-sectional view of a main part of a related cylindrical roller bearing.

### DESCRIPTION OF EMBODIMENTS

Hereinafter, a resin cage for a cylindrical roller bearing and a cylindrical roller bearing according to an embodiment of the present invention will be described in detail with reference to the drawings.

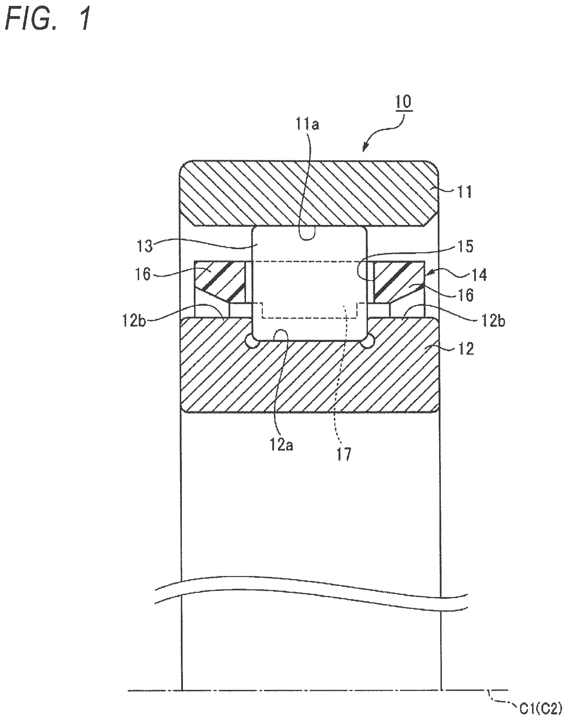

As shown in FIG. 1, a cylindrical roller bearing 10 includes an outer ring 11 having an outer ring raceway surface 11a formed on an inner circumferential surface, an inner ring 12 having an inner ring raceway surface 12a formed on an outer circumferential surface, a plurality of cylindrical rollers 13 rollably disposed between the outer ring raceway surface 11a and the inner ring raceway surface 12a, and a roller guide type resin cage 14 forming a plurality of pocket portions 15 which rotatably hold the plurality of cylindrical rollers 13 respectively.

The cylindrical roller bearing 10 may be lubricated with any lubricant of lubricating oil and grease.

The resin cage 14 is made of a synthetic resin material such as polyamide, polyacetal, polyether ether ketone, polyimide, and polyphenylene sulfide, and if necessary, a reinforcing material such as a glass fiber, a carbon fiber, and a aramid fiber may be added to the resin.

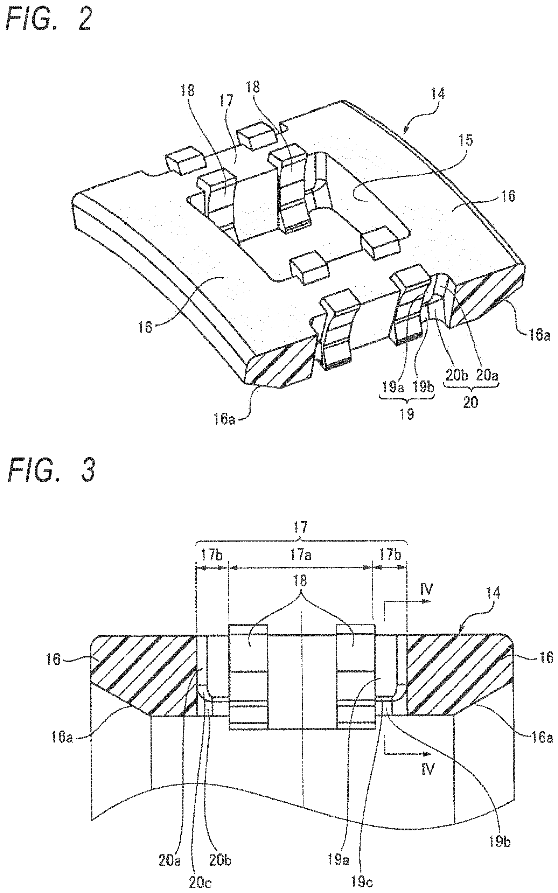

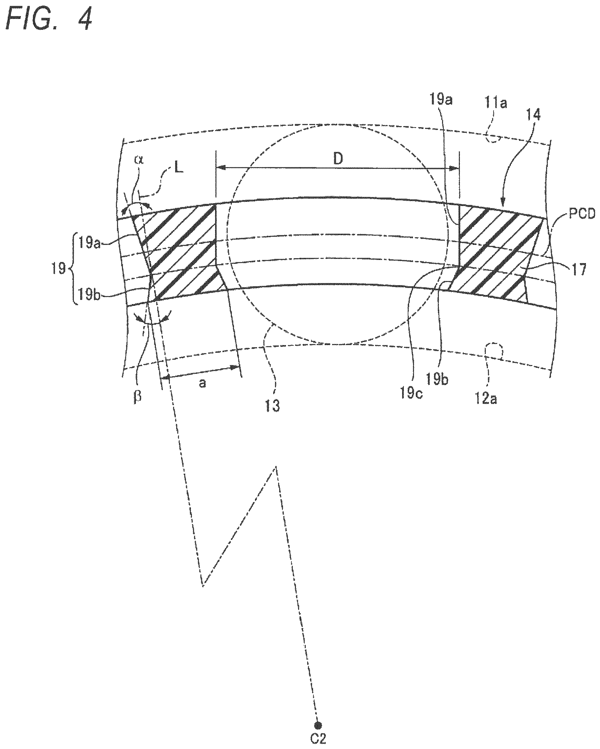

As shown in FIGS. 1 to 4, the resin cage 14 includes a pair of annular portions 16, 16, and a plurality of column portions 17 axially connecting the pair of annular portions 16, 16. An axially intermediate portion 17a of the column portion 17 includes a pair of roller holding portions 18, 18 disposed so as to be spaced apart from each other in an axial direction. The pair of roller holding portions 18, 18 has a predetermined axial length and is formed so as to protrude in a circumferential direction more than a side surface of the column portion 17 located therebetween. In this way, the pair of roller holding portions 18, 18 formed by being divided in the axial direction can be elastically deformed upon receiving a force generated by mutual sliding with the cylindrical roller 13, and can release a part of a force received by the column portion 17.

In the present embodiment, the axially intermediate portion 17a including the pair of roller holding portions 18, 18 protrudes further to an inner diameter side than both axial end portions 17b of the column portion 17 positioned axially outward than the pair of roller holding portions 18, 18 and the annular portions 16, 16.

Each of both circumferential side surfaces 19 of the both axial end portions 17b of the column portion 17 includes a first flat surface 19a which gradually shortens a circumferential length of the column portion 17 from the outer circumferential surface toward the inner diameter side, and a second flat surface 19b which gradually lengthens the circumferential length of the column portion 17 from a connecting portion 19c with the first flat surface 19a toward the inner diameter side. By providing the second flat surface 19b, the inner diameter side thickness of the column portion 17 can be increased, and breakage due to insufficient strength can be prevented.

When the first flat surface 19a intersects a straight line L extending along a radial direction of the cage 14 at a first angle α, and the second flat surface 19b intersects the straight line L at a second angle β, α < β is set.

Further, the first angle α of the first flat surface 19a is formed such that a distance D between the pair of first flat surfaces 19a, 19a which form the pocket portion 15 and face each other in the circumferential direction is constant over the radial direction of the cage 14 or spaced from each other as it goes toward the outer diameter side of the cage 14. Accordingly, the mold is not forcibly removed at the time of molding the cage. Specifically, in the present embodiment, the first flat surfaces 19a of the adjacent column portions 17 configuring the pocket portion 15 are parallel to each other.

The pocket corner portion 20 between the column portion 17 and the annular portions 16, 16 includes a first curved surface 20a having a first curvature radius and connecting the first flat surface 19a to the annular portion 16, and a second curved surface 20b having a second curvature radius larger than the first curvature radius and connecting the second flat surface 19b to the annular portion 16.

Further, in a state in which a revolution center C1 of the cylindrical roller 13 coincides with an axis center C2 of the cage 14 (see FIG. 1), the connecting portion 19c between the first flat surface 19a and the second flat surface 19b and a connecting portion 20c between the first curved surface 20a and the second curved surface 20b are located on an inner diameter side than a pitch circle diameter PCD of the cylindrical roller 13.

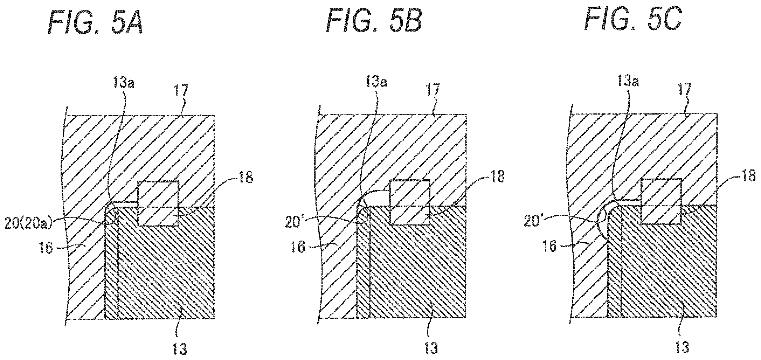

Generally, the pocket corner portion 20 of the cage 14 having a large curvature radius has an effect of relaxing stress concentration. However, as shown in FIGS. 5B and 5C, when the curvature radius of a pocket corner portion 20' is large, it is necessary to decrease the thickness of the column portion 17 or the annular portions 16, 16 in order to avoid contact between a chamfer portion 13a of the cylindrical roller 13 and the pocket corner portion 20' during operation. As a result, the strength of the column portion 17 or the annular portions 16, 16 decreases.

On the other hand, in the present embodiment, the first curvature radius of the first curved surface 20a < the second curvature radius of the second curved surface 20b is set. In a case of the roller guide cage, since the cage 14 is subjected to centrifugal expansion and thermal expansion during high-speed rotation, the inside diameter is restrained and a large force is generated on an inner diameter side of the cage 14. Therefore, since the stress concentration on the first curved surface 20a of the pocket corner portion 20 is not a problem, the first curvature radius of the first curved surface 20a is decreased to ensure the thickness of the column portion 17 and maintain the strength (see FIG. 5A), and the second curvature radius of the second curved surface 20b of the pocket corner portion 20 is increased to relax the stress concentration.

Further, since the first curved surface 20a and the second curved surface 20b of the pocket corner portion 20 each have a single curvature radius, there is no difficulty in manufacturing, and a design in which the chamfer portion 13a of the cylindrical roller 13 and the pocket corner portion 20 do not contact reliably can be easily performed.

Further, as described above, since the second angle β of the second flat surface 19b is set to be larger than the first angle α of the first flat surface 19a, even when the connecting portion 19c between the first flat portion 19a and the second flat portion 19b is located more on the inner diameter side than the pitch circle diameter PCD of the cylindrical roller 13, the thickness on the inner diameter side of the column 17 can be easily ensured. Therefore, a circumferential length of the inner circumferential surface of the column portion 17 is longer than the related one shown in FIG. 10.

The connecting portion 19c between the first flat surface 19a and the second flat surface 19b and the connecting portion 20c between the first curved surface 20a and the second curved surface 20b can be designed in any shape as long as the above relationship is satisfied. For example, each of the connecting portion 19c and the connecting portion 20c may be formed in a stepped shape having an upper surface.

In the present embodiment, tapered surfaces 16a are formed to be inclined radially outward on the inner circumferential surfaces of the annular portions 16, 16 as they go axially outward. Accordingly, the oil supply and drainage property of the lubricating oil can be improved.

As described above, according to the resin cage for a cylindrical roller bearing 14 and the cylindrical roller bearing 10 of the present embodiment, each of the both circumferential side surfaces 19 of the both axially end portions 17b of the column portion 17 located axially outer than the roller holding portions 18 includes the first flat surface 19a which gradually shortens the circumferential length of the column portion 17 from the outer circumferential surface toward the inner diameter side, and the second flat surface 19b which gradually lengthens the circumferential length of the column portion 17 from a connecting portion 19c with the first flat surface 19a toward the inner diameter side. The pocket corner portion 20 between the column portion 17 and the annular portion 16 includes the first curved surface 20a having the first curvature radius and connecting the first flat surface 19a to the annular portion 16, and the second curved surface 20b having the second curvature radius larger than the first curvature radius and connecting the second flat surface 19b to the annular portion 16. Further, in the state in which the revolution center C1 of the cylindrical roller 13 coincides with the axis center C2 of the cage 14, the connecting portion 19c between the first flat surface 19a and the second flat surface 19b and the connecting portion 20c between the first curved surface 20a and the second curved surface 20b are located on the inner diameter side than the pitch circle diameter PCD of the cylindrical roller 13.

Accordingly, the thickness of the inner diameter side of the column portion 17 formed by the second flat surface 19b can be increased, and the stress concentration on the pocket corner portion 20 can be relaxed by the second curved surface 20b having a large curvature radius, and the strength of the inner diameter side of the column portion 17 can be improved. As a result, in the roller guide type cage 14, sufficient durability can be ensured even under severe use conditions such as high-speed rotation in which a force competing with the cylindrical roller 13 is generated on the inner diameter side of the column portion 17.

Since the first curved surface 20a and the second curved surface 20b each have a single curvature radius, the pocket corner portion 20 can be easily manufactured.

Further, in the state in which the revolution center C1 of the cylindrical roller 13 coincides with the axis center C2 of the cage 14, since the connecting portion 19c between the first flat surface 19a and the second flat surface 19b and the connecting portion 20c between the first curved surface 20a and the second curved surface 20b are located more on the inner diameter side than the pitch circle diameter PCD of the cylindrical roller 13, the chamfer portion of the cylindrical roller 13 can be designed so as not to reliably come into contact with the pocket corner portion 20.

The present invention is not limited to the above-described embodiment and may be appropriately modified, improved, or the like.

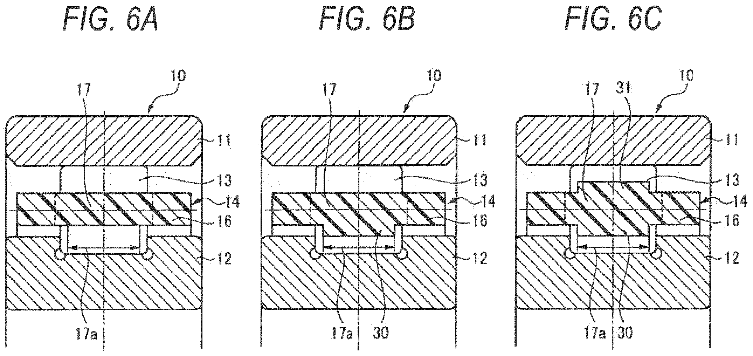

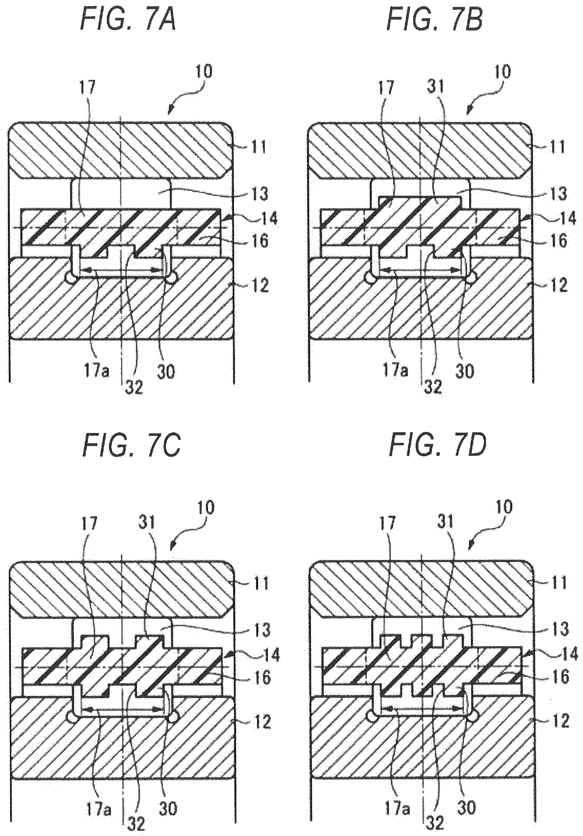

For example, the shape of the axially intermediate portion 17a of the column portion 17 is deformable as shown in FIGS. 6 and 7.

That is, as in the modification shown in FIG. 6A, the axially intermediate portion 17a of the column portion 17 may have a shape which does not protrude from the both axial end portions 17b of the column portion 17 and the annular portions 16, 16. Further, as in the modification shown in FIG. 6B, the axially intermediate portion 17a of the column portion 17 may have a protrusion 30 protruding further toward the inner diameter side than the both axial end portions 17b of the column portion 17 and the annular portions 16, 16. Further, as in the modification shown in FIG. 6C, the axially intermediate portion 17a of the column portion 17 may have protrusions 30, 31 protruding further toward the inner diameter side and the outer diameter side than the both axial end portions 17b of the column portion 17 and the annular portions 16, 16.

Further, as in the modifications shown in FIGS. 7A and 7B, the protrusion 30 protruding toward the inner diameter side may be formed to be spaced apart in the axial direction, and as in the modification shown in FIG. 7D, both of the protrusions 30, 31 protruding toward the inner diameter side and the outer diameter side may be formed spaced apart from each other in the axial direction. Particularly, a relief portion 32 formed between the plurality of axially separated protrusions 30, 30 on the inner diameter side holds the lubricant in the circumferential direction of the column portion 17 and contributes to lubricity.

The roller holding portions 18, 18 may also be designed according to the shape of the axially intermediate portion 17a. That is, in the modifications shown in FIGS. 6A to 6C, the axially intermediate portion 17a may include the single roller holding portion 18 provided over the entire region, and may include the pair of roller holding portions 18, 18 disposed spaced apart from each other in the axial direction as in the present embodiment. Further, in the modifications shown in FIGS. 7A to 7C, it is easy to adopt a configuration including a pair of roller holding portions 18, 18 disposed to be spaced in the axial direction, and in the modification shown in FIG. 7D, the axially intermediate portion 17a may have three roller holding portions 18, 18, 18 disposed spaced apart from each other in the axial direction.

As shown in FIGS. 6 and 7, the annular portions 16, 16 may have a shape in which the tapered surface 16a is not provided.

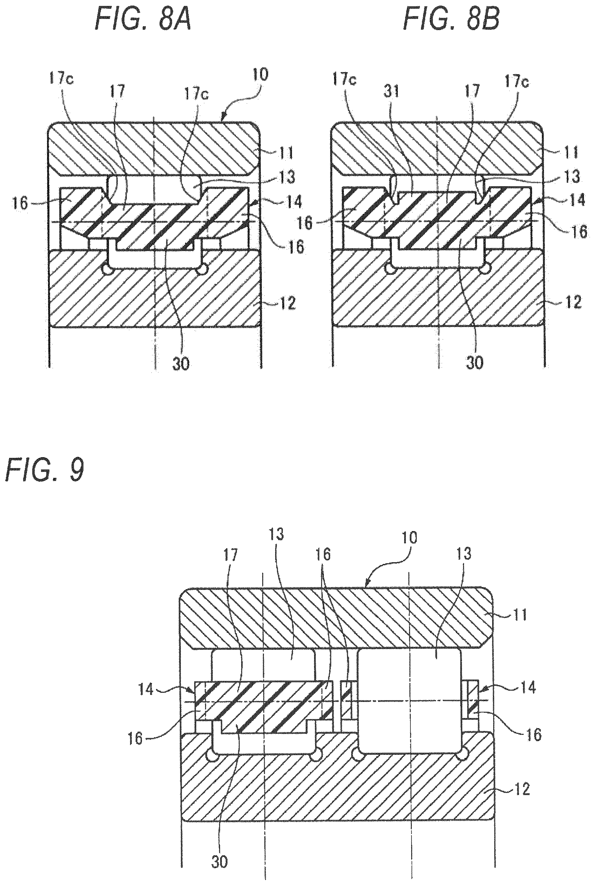

As shown in FIGS. 8A and 8B, the strength of the cage 14 may be increased by increasing the radial thickness of the annular portions 16, 16. Specifically, in the case of the modification shown in FIG. 8A, the outer circumferential surfaces of the annular portions 16, 16 may be larger than the outer diameter of the column portion 17 (roller holding portion 18), and in the case of the modification shown in FIG. 8B, the outer circumferential surfaces of the annular portions 16, 16 may be larger than the outer diameter of an outer diameter side protrusion 31 (roller holding portion 18). Accordingly, it is possible to increase the strength of the annular portions 16, 16 while ensuring a proper opening width of the cylindrical roller 13.

Further, in these modifications, the both axial end portions of the column portion 17 include inclined surfaces 17c each of which connects an outer circumferential surface of the column portion 17 to the outer circumferential surfaces of the annular portions 16, 16, and the strength of the column portion 17 can also be increased by increasing the thickness of the column portion 17 by the inclined surfaces 17c.

Further, the present invention is not limited to a single-row cylindrical roller bearing, and may be applied to a double-row cylindrical roller bearing as shown in FIG. 9.

This application is based on Japanese Patent Application No. 2016-221737 filed on November 14, 2016, the entire contents of which are incorporated herein by reference.

### REFERENCE SIGNS LIST

10 cylindrical roller bearing
11 outer ring
11a outer ring raceway surface
12 inner ring
12a inner ring raceway surface
13 cylindrical roller
14 cage (resin cage for cylindrical roller bearing)
15 pocket portion
16 annular portion
17 column portion
17a axially intermediate portion of column portion
17b axial end portion of column portion
18 roller holding portion
19a first flat surface
19b second flat surface
19c connecting portion
20 pocket portion
20a first curved surface
20b second curved surface
20c connecting portion
PCD pitch circle diameter of roller

## Claims

1. A resin cage for a cylindrical roller bearing used in a roller guide type comprising:
a pair of annular portions; and
a plurality of column portions which axially connect the pair of annular portions,
wherein the resin cage forms a plurality of pocket portions which rotatably hold a plurality of cylindrical rollers respectively,
wherein the column portion includes a roller holding portion at an axially intermediate portion,
wherein each of both circumferential side surfaces of both axial end portions of the column portion located axially outer than the roller holding portion includes:
a first flat surface which gradually shortens a circumferential length of the column portion from an outer circumferential surface toward an inner diameter side; and
a second flat surface which gradually lengthens the circumferential length of the column portion from a connecting portion with the first flat surface toward the inner diameter side,
wherein a pocket corner portion between the column portion and the annular portion includes:
a first curved surface which has a first curvature radius and which connects the first flat surface to the annular portion; and
a second curved surface which has a second curvature radius larger than the first curvature radius and which connects the second flat surface to the annular portion, and
wherein in a state in which a revolution center of the cylindrical roller coincides with an axis center of the cage, the connecting portion between the first flat surface and the second flat surface and a connecting portion between the first curved surface and the second curved surface are located on an inner diameter side than a pitch circle diameter of the cylindrical rollers.

2. The resin cage for a cylindrical roller bearing according to claim 1,
wherein a first angle at which the first flat surface intersects a straight line extending along a radial direction of the cage is smaller than a second angel at which the second flat surface intersects the straight line.

3. The resin cage for a cylindrical roller bearing according to claim 1 or 2,
wherein the first angle at which the first flat surface intersects a straight line extending along a radial direction of the cage of the first flat surface is formed such that a distance between a pair of the first flat surfaces which form the pocket portion is constant over the radial direction of the cage or spaced apart from each other as it goes toward an outer diameter side of the cage.

4. A cylindrical roller bearing comprising:
an outer ring having an outer ring raceway surface formed on an inner circumferential surface;
an inner ring having an inner ring raceway surface formed on an outer circumferential surface;
a plurality of cylindrical rollers rollably disposed between the outer ring raceway surface and the inner ring raceway surface; and
the resin cage for a cylindrical roller bearing according to any one of claims 1 to 3.
